(19) **Europäisches Patentamt**
**European Patent Office**
**Office européen des brevets**

(11) **EP 3 209 529 B1**

(12) **EUROPEAN PATENT SPECIFICATION**

(45) Date of publication and mention
of the grant of the patent:
**06.02.2019 Bulletin 2019/06**

(51) Int Cl.:
***B60T 8/1755*** (2006.01)     ***B60W 40/103*** (2012.01)

(21) Application number: **14812412.6**

(22) Date of filing: **20.10.2014**

(86) International application number:
**PCT/EP2014/072439**

(87) International publication number:
**WO 2016/062327 (28.04.2016 Gazette 2016/17)**

(54) **METHOD FOR ESTIMATING A VEHICLE SIDE SLIP ANGLE, COMPUTER PROGRAM IMPLEMENTING SAID METHOD, CONTROL UNIT HAVING SAID COMPUTER PROGRAM LOADED, AND VEHICLE COMPRISING SAID CONTROL UNIT**

VERFAHREN ZUR SCHÄTZUNG EINES FAHRZEUGDRIFTWINKELS, COMPUTERPROGRAMM ZUR IMPLEMENTIERUNG DES BESAGTEN VERFAHRENS, STEUERUNGSEINHEIT MIT BESAGTEM GELADENEM COMPUTERPROGRAMM UND FAHRZEUG MIT BESAGTER STEUERUNGSEINHEIT

PROCÉDÉ POUR ESTIMER UN ANGLE DE DÉRAPAGE D'UN VÉHICULE, PROGRAMME INFORMATIQUE METTANT EN OEUVRE LEDIT PROCÉDÉ, UNITÉ DE COMMANDE DANS LAQUELLE EST CHARGÉ LEDIT PROGRAMME INFORMATIQUE, ET VÉHICULE COMPRENANT LADITE UNITÉ DE COMMANDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.08.2017 Bulletin 2017/35**

(73) Proprietors:
  • **Politecnico di Milano**
    **20133 Milano (IT)**
  • **Maserati S.P.A.**
    **41100 Modena (IT)**

(72) Inventors:
  • **SAVARESI, Sergio Matteo**
    **I-26100 Cremona (IT)**
  • **CORNO, Matteo**
    **I-20134 Milan (IT)**

  • **SELMANAJ, Donald**
    **I-20127 Milan (IT)**
  • **PANZANI, Giulio**
    **I-20900 Monza (IT)**
  • **GIRARDIN, Christian**
    **I-13878 Candelo (BI) (IT)**
  • **BUSSALAI, Giovanni**
    **I-10100 Torino (IT)**

(74) Representative: **Gregorj S.r.l.**
    **Via L. Muratori, 13/b**
    **20135 Milano (IT)**

(56) References cited:
    **EP-A- 1 627 790**        **WO-A1-2013/087169**
    **DE-A1-102008 013 102**   **GB-A- 2 461 551**
    **JP-A- 2008 030 616**     **US-A1- 2003 089 542**

**Description**

BACKGROUND

Technical field

The present invention relates to a method for estimating side slip angle of a vehicle, particularly of a four-wheeled vehicle. Knowing the side slip angle can be of use for example in the stability control of the vehicle itself.
The vehicle side slip angle (also known as the body vehicle side slip angle) is the angle between the velocity vector measured at the centre of gravity and the longitudinal axis of the vehicle.

Description of the Related Art

The need of estimating the side slip angle of a vehicle is increasingly felt, particularly for safety reasons and for the vehicle stability control.
Since measurement of the side slip angle is difficult, several methods for estimating the same have been proposed, as disclosed for example by documents DE 10 2008 013 102 A1 and WO 2013 / 087 169 A1.
In order to estimate the side slip angle two different approaches are currently known. In a first approach (dynamic approach) dynamic quantities of the vehicle are used, whilst in a second approach (cinematic approach) only cinematic quantities are used.

BRIEF SUMMARY OF THE INVENTION

It has been observed that known approaches for estimating the side slip angle are unsatisfactory because of the poor resulting estimation and for the algorithm computation complexity.
Hence, it has been found convenient a cinematic approach in which a side slip angle estimation is performed by making use of a non-linear filter incorporating a vehicle cinematic model, such as a Kalman or a Luenberger filter, in which the non-linear filter contains a parameter which is continuously updated during motion of the vehicle as a function of the vehicle yaw rate and/or the yaw acceleration and/or the lateral acceleration.
Therefore, the present invention relates to a method for determining the side slip angle of a vehicle according to the appended claim 1.
Dependent claims 2-16 relate to particular advantageous embodiments of the method of claim 1.
The present invention further relates to a computer program loadable in a control unit of a vehicle according to claim 17.
The present invention further relates to a control unit of a vehicle according to claim 18.
The present invention further relates to a vehicle according to claim 19.

BRIEF DESCRIPTION OF THE DRAWINGS

Further characteristics and advantages will be more apparent from the following description of a preferred embodiment and of its alternatives given as a way of an example with reference to the enclosed drawings in which:

Figure 1a shows a reference system associated to a vehicle for which the side slip angle is to be calculated;

Figure 1b shows schematically a situation of sensors not aligned with the vehicle axes X, Y, Z;

Figure 1c shows schematically the compensation of the effect of gravity on the lateral acceleration Ay due to the vehicle roll;

Figure 2 is a block diagram illustrating a method for estimating the side slip angle of a vehicle according to a possible embodiment of the invention;

Figure 3 is a detailed block diagram of module 7 in Figure 2 according to a possible embodiment;

Figure 4 is a detailed block diagram of a part of module 13 in Figure 2 according to a possible embodiment;

Figure 5 is a detailed block diagram of a further part of module 13 in Figure 2 according to a possible embodiment;

Figure 6 is a detailed block diagram of a further part of module 13 in Figure 2 according to a possible embodiment;

Figure 7 is a detailed block diagram of module 15in Figure 2 according to a possible embodiment;

Figure 8 shows a possible curve describing a parameter F of a non-linear filter used for determining the estimated side slip angle in the method according to the invention.

<u>DETAILED DESCRIPTION</u>

In the following description, same alphanumeric references are used for analogous exemplary elements when they are depicted in different drawings.

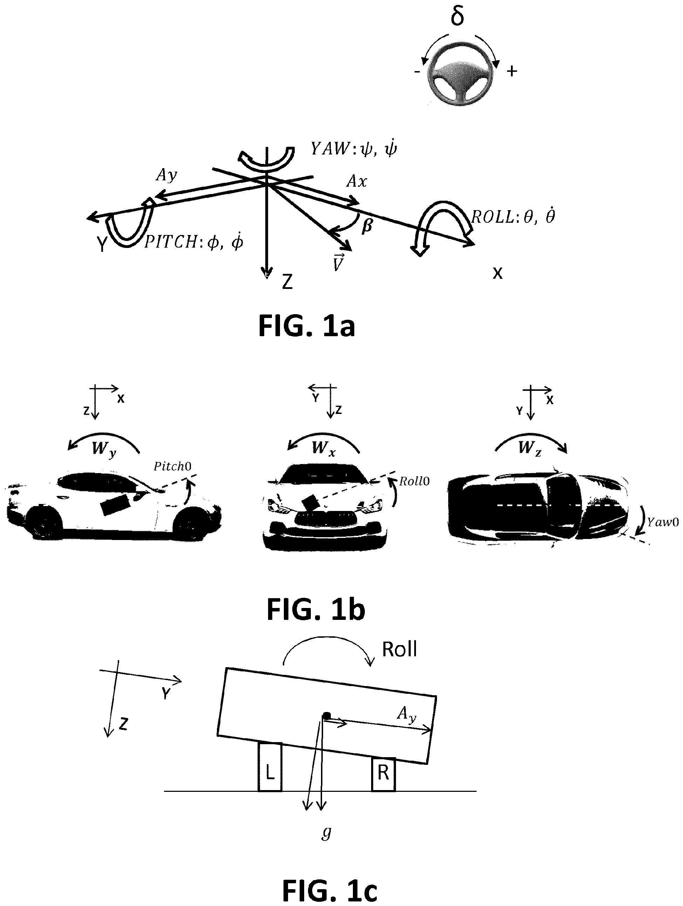

Figure 1a schematically shows a reference system for a vehicle. Axes X, Y, Z respectively are the longitudinal, transversal and vertical axes of the vehicle. As it is known to the skilled person, roll, yaw and pitch indicate the rotation of the vehicle about respectively axis X, axis, Y, and axis Z. As it is shown in Figure 1a:

- roll and roll rate are respectively indicated as $\theta$, $\dot{\theta}$;

- yaw and yaw rate are respectively indicated as $\psi$, $\dot{\psi}$;

- pitch and pitch rate are respectively indicated as $\phi$, $\dot{\phi}$.

Moreover, Ax and Ay respectively indicate the vehicle acceleration along axis X and Axis Y, i.e. the longitudinal acceleration and the lateral acceleration.

Vector $\vec{V}$ indicates the actual vehicle velocity, and β indicates the vehicle side slip angle, i.e. the angle between vector $\vec{V}$ and axis X;

δ represents the steering angle.

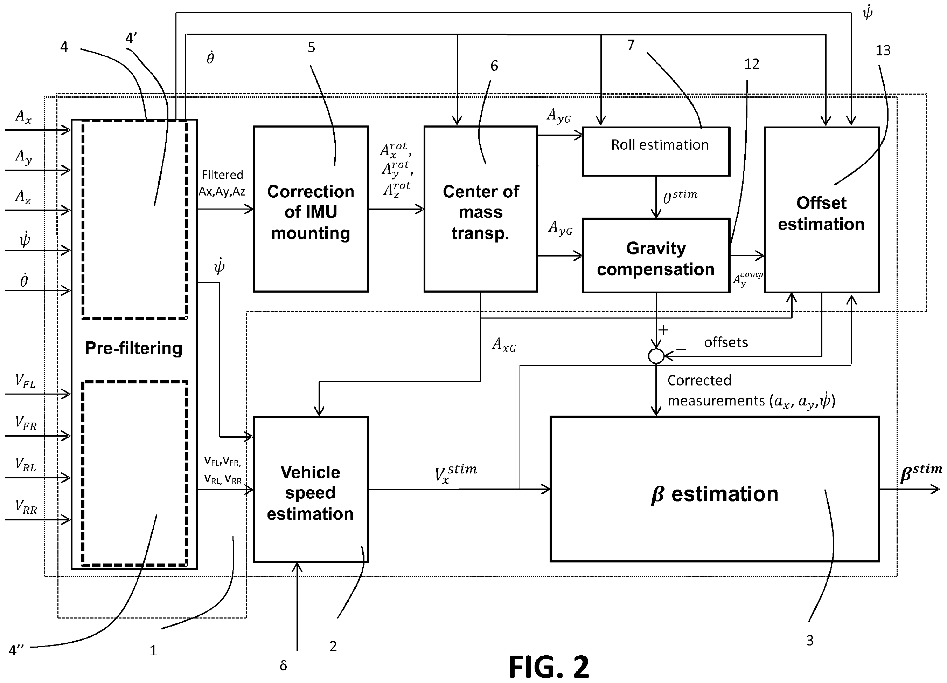

Figure 2 shows a block diagram schematically depicting a method for estimating the side slip angle of a vehicle according to a possible embodiment of the invention. The method determines an estimated vehicle side slip angle $\beta^{stim}$ on the basis of several inputs which are measures of cinematic quantities detected for example by corresponding sensors provided on the vehicle, each sensor being suitable to generate a signal representing the measured cinematic quantity. Hence, the method according to the invention comprises detecting signals representing at least the following cinematic quantities:

- vehicle longitudinal Ax, lateral Ay and vertical Az accelerations, which can be detected for example by a suitable Inertial Measurement Unit ("IMU") mounted on the vehicle;

- vehicle yaw rate $\dot{\psi}$ and roll rate $\dot{\theta}$, which can be detected for example by respective gyros mounted on the vehicle;

- linear speeds of the vehicle wheels, particularly of the left front wheel $V_{FL}$, of the right front wheel $V_{FR}$, of the left rear wheel $V_{RL}$ and of the right rear wheel $V_{RR}$. In general, sensors associated to the wheels actually detects their angular speeds and then the linear speed can be determined on the basis of the angular speed detected and the wheel radius. For example, encoders, or resolvers or the like can be used for determining angular speeds.

Ingoing signals are pre-treated in a corresponding pre-treating step, indicated schematically as a module 1 in dotted line in Figure 2. Module 1 in turn can comprise several modules corresponding to method steps whose details will described below. The pre-treating steps corresponding to module 1 result in the determination of corrected measurements of longitudinal acceleration $a_x$, lateral acceleration $a_y$, and yaw rate $\dot{\psi}$, and corrected measurements of the left front wheel $v_{FL}$, of the right front wheel $v_{FR}$, of the left rear wheel $v_{RL}$ and of the right rear wheel $v_{RR}$.

Corrected measurements of the wheels speeds and preferably also steering angle δ are inputs for a module 2 ("Vehicle speed estimation") which can realize a method step of determining an estimated vehicle longitudinal vehicle speed $V_x^{stim}$. Further details of module 2 will be given below.

Corrected measurements of longitudinal acceleration $a_x$, lateral acceleration $a_y$, and yaw rate $\dot{\psi}$ and estimated vehicle longitudinal vehicle speed $V_x^{stim}$ are inputs into a module 3 ("β estimation"), which actually determines an estimated side slip angle $\beta^{stim}$ on the basis of these inputs. The method steps underlying module 3 will be also described in great detail below.

A detailed description of each module shown in Figure 2 will be hereinafter given.

In accordance with an embodiment, module 1 comprises a module 4 ("Prefiltering") which realizes a method step of filtering the signals representing the cinematic quantities detected by the sensors installed on the vehicle. Particularly module 4 comprises a first filtering module 4' for filtering the signals representing the vehicle cinematic quantities (i.e. vehicle longitudinal acceleration Ax, lateral acceleration Ay and vertical acceleration Az, vehicle yaw rate $\dot{\psi}$ and vehicle roll rate $\dot{\theta}$) and a second filtering module 4" for filtering the signals representing the wheels cinematic quantities (i.e. front left wheel speed $V_{FL}$, front right wheel speed $V_{FR}$, rear left wheel speed $V_{RL}$, rear right wheel speed $V_{RR}$). Filtering is mainly performed in order to remove noise in the signals. Particularly, some measurements can be influenced by the vehicle vertical dynamics. Signals are advantageously filtered by a low-pass filter. The choice of the cutoff frequency depends on the vehicle considered.

In accordance with an embodiment, module 1 comprises a module 5 ("Correction of IMU mounting") which realizes a method step of correcting the signals (preferably the signals filtered in module 4') representing the vehicle accelerations, i.e. the vehicle longitudinal acceleration Ax, lateral acceleration Ay and vertical acceleration Az. Module 5 and the corresponding method step can be necessary in the case the sensors for detecting the vehicle accelerations, for example the IMU, are not aligned with the vehicle axis, i.e. forming angles $roll_0$ (static roll), $pitch_0$ (pitch mounting) and $yaw_0$ (static yaw) with the vehicle axes X, Y, Z. The situations is illustrated in Figure 1B.

Static roll, pitch mounting and static yaw, if not already known, can be determined for example as follows.

Measurements of vehicle longitudinal acceleration Ax, lateral acceleration Ay and vertical acceleration Az with vehicle in stopped conditions are performed. Then, for each component of the acceleration, a mean value of the detected samples is calculated. Mean values of longitudinal acceleration, lateral acceleration and vertical acceleration are indicated as $Ax_{mean}, Ay_{mean}, Az_{mean}$.

Then, static roll $roll_0$ and pitch mounting $pitch_0$ can be calculated with the following formulae:

$$PITCH_0 = atan\left(-\frac{Ax_{mean}}{Az_{mean}}\right)$$

$$ROLL_0 = atan\left(\frac{Ay_{mean}}{cos(PITCH_0)Az_{mean} - sin(PITCH_0)Ax_{mean}}\right)$$

The static yaw $yaw_0$ can be evaluated as the yaw such that the error between the accelerations measured (longitudinal Ax and/or lateral Ay) and the actual accelerations (for example measured with an already tuned sensor) is minimized. For the error minimization, the root mean square of the error can be calculated.

Once static roll, pitch mounting and static yaw are identified, the values of longitudinal acceleration Ax, lateral acceleration Ay and vertical acceleration Az as entered into module 5 can be corrected by means of a rotation matrix, thereby obtaining corrected values $A_x^{rot}, A_y^{rot}, A_z^{rot}$. For example the acceleration corrected values $A_x^{rot}, A_y^{rot}, A_z^{rot}$ can be calculated with the following formula:

$$\begin{bmatrix} A_x^{rot} \\ A_y^{rot} \\ A_z^{rot} \end{bmatrix} = R_{zyx}^T \begin{bmatrix} A_x \\ A_y \\ A_z \end{bmatrix}$$

wherein:

$$R_{zyx} = R_z R_y R_x$$

and:

$$R_x = \begin{bmatrix} 1 & 0 & 0 \\ 0 & \cos(roll_0) & \sin(roll_0) \\ 0 & -\sin(roll_0) & \cos(roll_0) \end{bmatrix}$$

$$R_y = \begin{bmatrix} \cos(pitch_0) & 0 & -\sin(pitch_0) \\ 0 & 1 & 0 \\ \sin(pitch_0) & 0 & \cos(pitch_0) \end{bmatrix}$$

$$R_z = \begin{bmatrix} \cos(yaw_0) & \sin(yaw_0) & 0 \\ -\sin(yaw_0) & \cos(yaw_0) & 0 \\ 0 & 0 & 1 \end{bmatrix}$$

In accordance with an embodiment, module 1 comprises a module 6 ("Center of mass meas.") which realizes a method step of correcting the signals representing the longitudinal acceleration Ax, the lateral acceleration Ay and the vertical acceleration Az (preferably previously corrected in module 4' and/or in module 5) in case the sensors for detecting the vehicle accelerations, for example the IMU, are not positioned exactly in the vehicle centre of gravity.

In principle, the correction of longitudinal acceleration Ax, lateral acceleration Ay and vertical acceleration Az into corresponding values $Ax_G$, $Ay_G$, $Az_G$ in which the sensor position relative to the center of gravity is taken into consideration can be calculated with the following formulae:

$$A_{xG} = A_{xp} - \left(z_p\ddot{\phi} - y_p\ddot{\psi}\right) + x_p\dot{\psi}^2 - z_p\dot{\psi}\dot{\theta} + x_p\dot{\phi}^2 - y_p\dot{\phi}\dot{\theta}$$

$$A_{yG} = A_{yp} + \left(z_p\ddot{\theta} - x_p\ddot{\psi}\right) + y_p\dot{\psi}^2 - z_p\dot{\psi}\dot{\phi} + y_p\dot{\theta}^2 - x_p\dot{\phi}\dot{\theta}$$

$$A_{zG} = A_{zp} - \left(y_p\ddot{\theta} - x_p\ddot{\phi}\right) + z_p\dot{\phi}^2 - y_p\dot{\psi}\dot{\phi} + z_p\dot{\theta}^2 + x_p\dot{\psi}\dot{\theta}$$

wherein $x_p$, $y_p$ and $z_p$ indicate the sensor position in the previously described reference system X, Y, Z relative to the center of gravity, which can be conventionally considered the origin of the axes.

It has however verified that the pitch influence, which is not an input of the system, is negligible. Hence, the corrected values of the longitudinal acceleration $Ax_G$, lateral acceleration $Ay_G$ and vertical acceleration $Az_G$ can be calculated with the following simplified formulae:

$$\begin{cases} A_{xG} = A_{xp} + x_p\dot{\psi}^2 - z_p\dot{\psi}\dot{\theta} \\ A_{yG} = A_{yp} + y_p\dot{\psi}^2 + y_p\dot{\theta}^2 \\ A_{zG} = A_{zp} + z_p\dot{\theta}^2 + x_p\dot{\psi}\dot{\theta} \end{cases}$$

The yaw rate $\dot{\psi}$ and the roll rate $\dot{\theta}$ in the above formula are preferably pre-filtered in the modules 4' and 4".

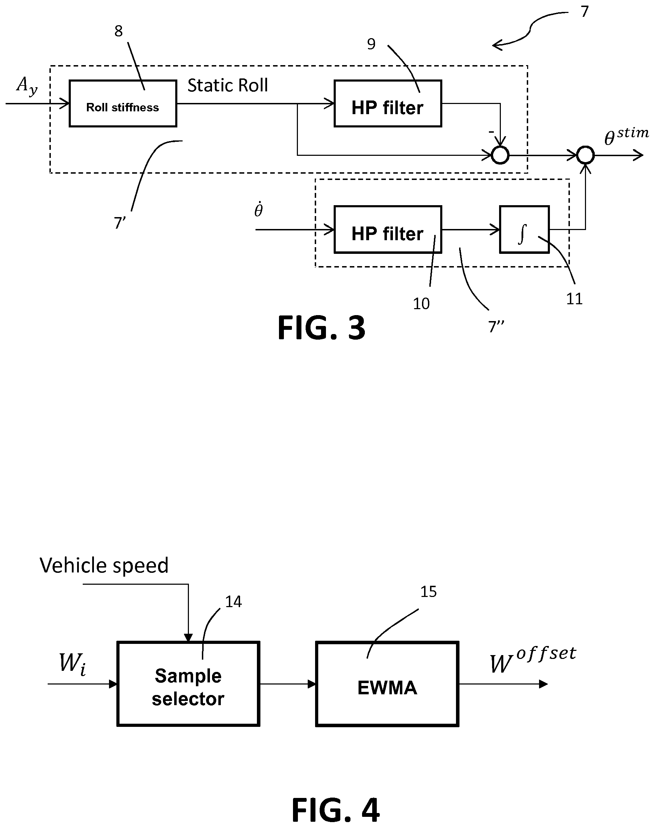

In accordance with an embodiment, module 1 comprises a module 7 ("Roll estimation") which realizes a method step of determining an estimated vehicle roll $\theta^{stim}$ on the basis of the lateral acceleration Ay and of the roll rate $\dot{\theta}$, preferably previously corrected as described above in modules 4', 5, 6. A possible detailed block representation of module 7 is shown in Figure 3.

A simple integration of the detected roll rate $\dot{\theta}$ is not sufficient for obtaining a reliable estimation of the vehicle roll since errors would tend to accumulate with the integrations. In order to overcome such a problem, a separation of dynamic roll and static roll may be realized.

As shown in Figure 3, module 7 advantageously comprises a first module 7' which realizes a method step of estimating an estimated static roll, and a second module 7" which realizes a method step of estimating an estimated dynamic roll. The estimated vehicle roll $\theta^{stim}$ is finally determined as the sum of the estimated static roll and of the estimated dynamic roll.

With reference to Figure 3, in the first module 7' a static roll is determined starting from the lateral acceleration Ay (possibly previously pre-treated in modules 4', 5, 6). In static conditions (i.e. when Ay is constant), there is a bi-univocal relationship between the lateral accelerations Ay and the vehicle roll, which is mainly due to suspensions configuration and stiffness which can be experimentally determined. On the basis of such relationship, in a module 8 ("Roll stiffness") a static roll is determined. Then, a frequency separation of the so determined static roll is performed by subtracting from the static roll the same static roll filtered in a high-pass filter 9 ("HP filter").

In module 7" the roll rate $\dot{\theta}$ (preferably previously pre-treated in module 4') is filtered in a second high-pass filter 10 and then integrated in an integrator module 11 ("∫"), thereby obtaining a dynamic roll.

The result in the elaboration of the static roll in module 7' is then summed to the dynamic roll determined in module 7", thereby obtaining the estimated vehicle roll $\theta^{stim}$.

In accordance with an embodiment, module 1 comprises a module 12 ("Gravity compensation") which realizes a method step of compensating the effect of gravity on the lateral acceleration Ay due to the vehicle roll $\theta$. The compensation is realized on the basis of the estimated vehicle roll $\theta^{stim}$ determined in module 7. In fact, when a roll is present, a component of the gravity acceleration is present along the Y axis, which is to be excluded and subtracted from the signal representing the lateral acceleration. The situation is illustrated in Figure 1c. For example, the compensated lateral acceleration $A_y^{comp}$ can be calculated with the following formula:

$$A_y^{comp} = A_y - g \cdot cos\left(\theta^{stim}\right)$$

Preferably the incoming acceleration Ay is previously pre-treated in modules 4', 5, and 6.

In accordance with an embodiment, module 1 comprises a module 13 ("Offset estimation") which realizes a method step of compensating other offsets present in the signals representing the longitudinal acceleration Ax, the lateral acceleration Ay, the yaw rate $\dot{\psi}$ and the roll rate $\dot{\theta}$.

With reference to the gyro offset, i.e. the offsets in the yaw rate $\dot{\psi}$ and in the roll rate $\dot{\theta}$, they are mainly electrical offsets. Hence, due to the electric offsets, even when vehicle is stopped the signals representing yaw rate $\dot{\psi}$ and the roll rate $\dot{\theta}$ are different from zero.

In order to determine the gyro offset, several samples of the signal representing the quantity of interest (yaw rate $\dot{\psi}$ or the roll rate $\dot{\theta}$, preferably previously pre-treated in module 4') can be collected for a preselected time while maintaining the vehicle stopped. Then a mean value of the samples can be calculated. Preferably, the mean value is calculated as an exponentially weighted moving average.

The above steps are schematically represented in the block diagram in Figure 4. The angular speed of interest Wi (which can be either the yaw rate $\dot{\psi}$ or the roll rate $\dot{\theta}$) enters in a module 14 ("Sample selector") which collects the samples only when the vehicle is stopped. For this reason the vehicle speed is also indicated as an input of the module 14. The samples exponentially weighted moving average is calculated in a module 15 ("EWMA") which determines the offset of the angular speed of interest $W^{offset}$.

With reference to the longitudinal and lateral accelerations, again, electrical offsets are present in the signals which may result in measurements different from zero even in the case there are no actual accelerations.

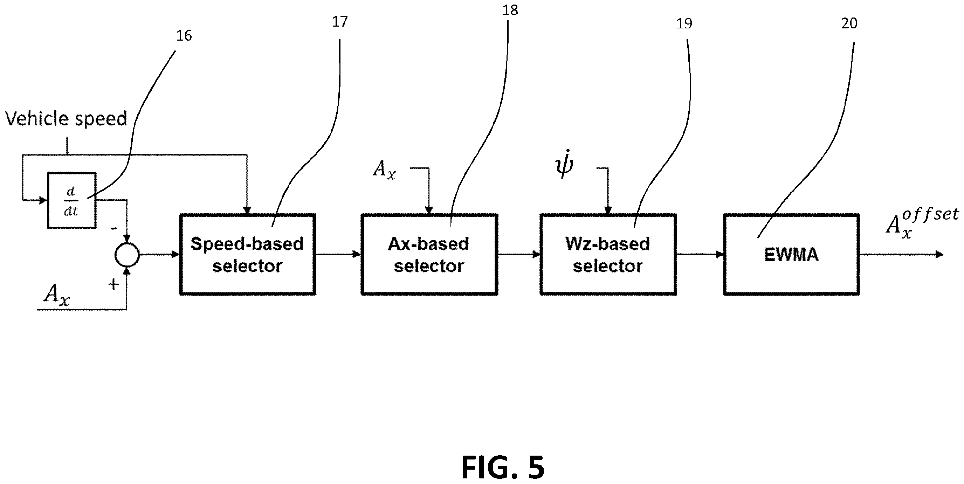

Referring to the longitudinal acceleration Ax, offsets can be determined in a similar manner as discussed for the gyro offsets. However, the samples are to be collected while the vehicle is in motion. Moreover, it is to be considered that, since vehicle pitch and lateral dynamics affect the longitudinal acceleration Ax measures, high longitudinal acceleration and high yaw rate conditions are preferably to be excluded. A block diagram representing possible steps for determining the longitudinal acceleration offset is shown in Figure 5. The longitudinal acceleration Ax is preferably previously pre-treated in modules 4',5, 6.

Hence, with reference to a possible embodiment shown in Figure 5, several samples of the signal representing the longitudinal accelerations Ax are collected for a preselected time while the vehicle is moving. At the same time, the vehicle speed is considered (For example, the estimated longitudinal vehicle speed $V_x^{stim}$ calculated in module 2 can be used as an input) and the derivative thereof is calculated in a module 16 so to obtain an acceleration. The difference between the longitudinal acceleration Ax sample and the vehicle speed derivative represents an acceleration offset.

The so determined offset samples are preferably excluded when:

- the vehicle speed exceeds a predetermined vehicle speed value. This step corresponds to a module 17 ("Speed-based selector"); and/or
- the longitudinal acceleration Ax exceeds a predetermined vehicle longitudinal acceleration value. This step corresponds to a module 18 ("Ax-based selector"); and/or
- the yaw rate $\dot{\psi}$ exceeds a predetermined vehicle yaw rate value. This step corresponds to a module 19 ("Wz-based selector").

Finally, a mean value of the selected samples can be calculated, thereby obtaining the longitudinal acceleration offset $A_x^{offset}$. This step corresponds to a module 20 ("EWMA") in Figure 5. Preferably, the mean value is calculated as an exponentially weighted moving average, preferably tuned with the same parameter used for calculating the exponentially weighted moving average for the gyro offset (Module 15 in Figure 4).

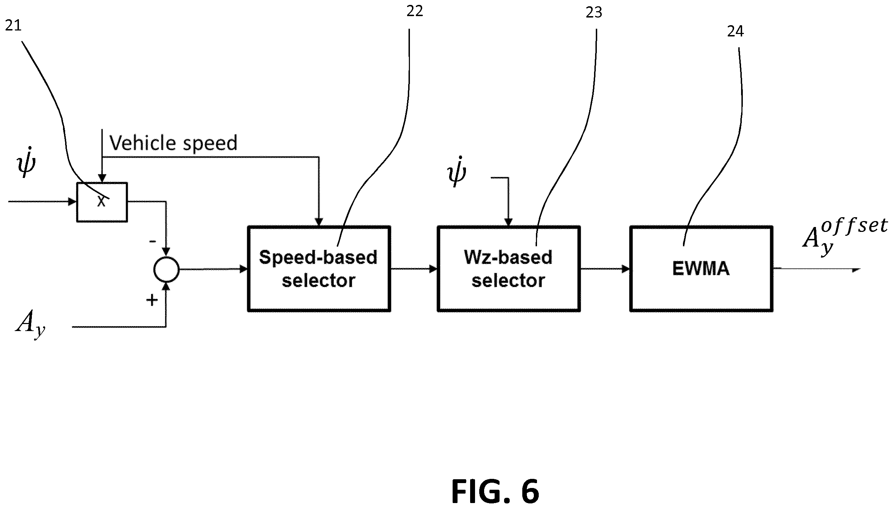

Referring now to the lateral acceleration Ay, the offsets can be determined in a similar manner as discussed for the longitudinal acceleration Ax. Again, the samples are to be collected while the vehicle is in motion. Moreover, high yaw rate conditions are preferably to be excluded. A block diagram representing possible steps for determining the lateral acceleration offset is shown in Figure 6. The lateral acceleration Ay is preferably previously pre-treated in modules 4',5, 6, 7, 12.

Hence, with reference to possible embodiment shown in Figure 5, several samples of the signal representing the lateral accelerations Ay are collected for a preselected time while the vehicle is moving. At the same time, the yaw rate $\dot{\psi}$, preferably the real yaw rate (i.e. the detected yaw rate already corrected by subtracting the yaw rate offset, calculated for example as discussed above) is measured and multiplied by the vehicle speed Vx, (for example the estimated longitudinal vehicle speed $V_x^{stim}$ calculated in module 2) in a module 21 ("x") so to obtain an acceleration. The difference between the lateral acceleration Ay sample and the acceleration calculated as discussed in module 21 represents a lateral acceleration offset.

However, the so determined offset samples are preferably excluded when:

- the vehicle speed exceeds a predetermined vehicle speed value. This step corresponds to module 22 ("Speed-based selector"); and/or
- the yaw rate $\psi$ exceeds a predetermined vehicle yaw rate value. This step corresponds to module 23 ("Wz-based selector").

Finally, a mean value of the selected samples can be calculated, thereby obtaining the lateral acceleration offset $A_y^{offset}$. This step corresponds to module 24 ("EWMA") in Figure 6. Preferably, the mean value is calculated as an exponentially weighted moving average, preferably tuned with the same parameters used for calculating the exponentially weighted moving average for the gyro offset (module 15 in Figure 4) and the exponentially weighted moving average for the longitudinal acceleration Ax (Module 20 in Figure 5).

Turning back to Figure 1, a detailed description of module 2 according to a possible embodiment, for determining an estimated vehicle longitudinal speed $V_x^{stim}$, is now given.

Since a direct measurement of the vehicle longitudinal speed is not available, it can be calculated starting from the wheels speed and from the signals coming from the sensors associated therewith. Particularly, advantageously, a longitudinal speed is determined for each wheel and then the four wheels speeds are considered for determining the estimated vehicle longitudinal speed $V_x^{stim}$.

Considering the front wheels only, the estimated vehicle speed can be determined in first instance by considering the detected front left wheel speed $V_{FL}$ and front right wheel speed $V_{FR}$ (preferably previously pre-filtered in module 4") and the steering angle δ, with the following formulae, representing the projections of the wheels speeds on the X axis:

$$V_{FL}^{st} = V_{FL} \cdot \cos(\delta)$$

$$V_{FR}^{st} = V_{FR} \cdot \cos(\delta)$$

wherein:

$V_{FL}^{st}$ indicates the estimated vehicle speed starting from the detected front left wheel speed $V_{FL}$;

$V_{FR}^{st}$ indicates the estimated vehicle speed starting from the detected front right wheel speed $V_{FR}$.

However, this approach does not consider the yaw rate effect. Hence, the estimated vehicle speed $V_{FL}^{st}$, $V_{FR}^{st}$ as calculated above can be further corrected by subtracting the speed components due to the yaw rate. For the rear wheels, which in general are not subject to a steering angle, the yaw rate effect can be subtracted by the wheel speeds $V_{RL}$, $V_{RR}$ calculated from the angular speeds detected by the sensors associated therewith. For example, the corrected estimated speeds $V_{FL}^{comp}$, $V_{FR}^{comp}$, $V_{RL}^{comp}$, $V_{RR}^{comp}$ can be determined with the following formulae:

$$V_{FL}^{comp} = V_{FL}^{st} - \dot{\psi}\frac{carr_F}{2}$$

$$V_{FR}^{comp} = V_{FR}^{st} + \dot{\psi}\frac{carr_F}{2}$$

$$V_{RL}^{comp} = V_{RL} - \dot{\psi}\frac{carr_R}{2}$$

$$V_{RR}^{comp} = V_{RR} + \dot{\psi}\frac{carr_R}{2}$$

wherein:

$carr_F$ represents the front axle track;
$carr_R$ represents the rear axle track.

The estimated vehicle speed $V_x^{stim}$ can be calculated from the four estimated speeds $V_{FL}^{comp}$, $V_{FR}^{comp}$, $V_{RL}^{comp}$ $V_{RR}^{comp}$ as:
the minimum speed if the vehicle is accelerating (i.e. if the vehicle has a positive longitudinal acceleration Ax, which can be obtained from the signal representing the longitudinal acceleration, possibly pre-filtered in modules 4',5 and 6) :

$$V_x^{stim} = \min (V_{FL}^{comp}, V_{FR}^{comp}, V_{RL}^{comp}, V_{RR}^{comp})$$

the maximum speed if the vehicle is decelerating (i.e. if the vehicle has a negative longitudinal acceleration Ax):

$$V_x^{stim} = \max (V_{FL}^{comp}, V_{FR}^{comp}, V_{RL}^{comp}, V_{RR}^{comp})$$

the four speeds mean value if the vehicle is moving at a constant speed or having a low acceleration/deceleration, i.e. a longitudinal acceleration Ax comprised between an upper and a lower acceleration thresholds :

$$V_x^{stim} = \min (V_{FL}^{comp}, V_{FR}^{comp}, V_{RL}^{comp}, V_{RR}^{comp})$$

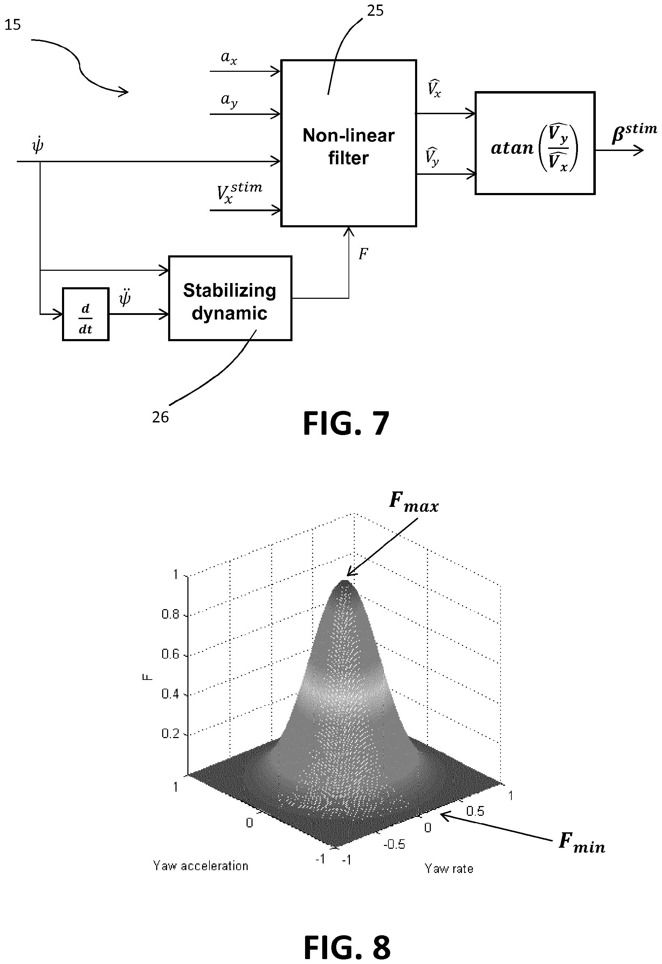

Turning now back again to Figure 1, a detailed description of module 3, which actually determines an estimated side slip angle $\beta^{stim}$, will be now given. A detailed block diagram of module 3 is given in Figure 7.
According to the embodiment of module 3 given in Figure 7, the estimated side slip angle $\beta^{stim}$ is determined on the basis of the corrected longitudinal acceleration $a_x$, lateral acceleration $a_y$ and yaw rate $\dot{\psi}$ and on the basis of the estimated vehicle speed $V_x^{stim}$, calculated as described above. The estimated side slip angle $\beta^{stim}$ is determined by a time-variant non-linear filter modeling the vehicle cinematic behavior on a curve, such as a Kalman Filter or a Luenberger Filter. With reference to the Figure 7, the non-linear filter is shown as module 25 ("Non-linear filter").
Many non-linear filters have been proposed describing the vehicle cinematic behavior on a curve. A general formula of such a non-linear filter can be the following one:

$$\begin{bmatrix} \dot{\widehat{V}}_x(t) \\ \dot{\widehat{V}}_y(t) \end{bmatrix} = A(\dot{\psi}(t))\begin{bmatrix} \widehat{V}_x(t) \\ \widehat{V}_y(t) \end{bmatrix} + B\begin{bmatrix} a_x(t) \\ a_y(t) \end{bmatrix} + K(\dot{\psi}(t))\left(V_x^{stim}(t) - \widehat{V_x}(t)\right)$$

For example, a standard known non-linear filter can have the following formula:

$$\begin{bmatrix} \dot{\widehat{V}}_x(t) \\ \dot{\widehat{V}}_y(t) \end{bmatrix} = \underbrace{\begin{bmatrix} 0 & \dot{\psi}(t) \\ -\dot{\psi}(t) & 0 \end{bmatrix}}_{A} \begin{bmatrix} \widehat{V}_x(t) \\ \widehat{V}_y(t) \end{bmatrix} + \underbrace{\begin{bmatrix} 1 & 0 \\ 0 & 1 \end{bmatrix}}_{B} \begin{bmatrix} a_x(t) \\ a_y(t) \end{bmatrix} + \underbrace{\begin{bmatrix} \alpha_1|\dot{\psi}(t)| \\ \alpha_2\dot{\psi}(t) \end{bmatrix}}_{K} \left( V_x^{stim}(t) - \widehat{V_x}(t) \right)$$

wherein $\alpha_1$, $\alpha_2$ are filter fixed parameters and $t$ indicates time. Solving the above non-linear system allows to determine in a predictive manner the vehicle accelerations $\begin{bmatrix} \dot{\widehat{V}}_x(t) \\ \dot{\widehat{V}}_y(t) \end{bmatrix}$ and the vehicle speeds $\begin{bmatrix} \widehat{V}_x(t) \\ \widehat{V}_y(t) \end{bmatrix}$. Finally the side slip angle can be determined from the vehicle speeds $\begin{bmatrix} \widehat{V}_x(t) \\ \widehat{V}_y(t) \end{bmatrix}$ with the following formula:

$$\beta^{stim} = atan\left(\frac{\widehat{V}_y}{\widehat{V}_x}\right)$$

However, using this standard non-linear filter the estimated side slip angle tends to diverge with time. Indeed, the model describes the vehicle behaviour on a curve which does not correspond to vehicle behaviour when the vehicle moves on a straight. In these running conditions lateral and longitudinal dynamics are not correlated and possible deviations due to external effects, such as road banking, or measurement errors, may arise.

Hence, according to the invention the estimated side slip angle $\beta^{stim}$ is determined on the basis of the corrected longitudinal acceleration $a_x$, lateral acceleration $a_y$ and yaw rate $\dot{\psi}$ and on the basis of the estimated vehicle speed $V_x^{stim}$, by a parametrical non-linear filter modeling the vehicle behavior on a curve, which filter is variable as a function of a parameter F depending from at least one of the yaw acceleration $\ddot{\psi}$, the yaw rate $\dot{\psi}$ and the lateral acceleration ay, in such a manner that when the vehicle moves straight, the estimated lateral velocity $\hat{V}_y(t)$ is driven close to zero.

Referring to the embodiment shown in Figure 7, parameter F is determined in a module 26 ("Stabilizing dynamic") on the basis of the yaw rate $\dot{\psi}$ and of the yaw acceleration $\ddot{\psi}$, which in turn can be calculated as a derivative of the yaw rate $\dot{\psi}$, if not already available. Parameter F becomes then an input for module 25.

In accordance with an embodiment, the general formula of the non-linear filter depending from parameter F can be the following:

$$\begin{bmatrix} \dot{\widehat{V}}_x(t) \\ \dot{\widehat{V}}_y(t) \end{bmatrix} = A(\dot{\psi}(t), F(t)) \begin{bmatrix} \widehat{V}_x(t) \\ \widehat{V}_y(t) \end{bmatrix} + B \begin{bmatrix} a_x(t) \\ a_y(t) \end{bmatrix} + K(\dot{\psi}(t)) \left( V_x^{stim}(t) - \widehat{V_x}(t) \right)$$

which differs from a standard one mainly in that matrix A depends on parameter F.

For example the calculation can be based on the following non-linear filter:

$$\begin{bmatrix} \dot{\widehat{V}}_x(t) \\ \dot{\widehat{V}}_y(t) \end{bmatrix} = \underbrace{\begin{bmatrix} 0 & \dot{\psi}(t) \\ -\dot{\psi}(t) & -F \end{bmatrix}}_{A} \begin{bmatrix} \widehat{V}_x(t) \\ \widehat{V}_y(t) \end{bmatrix} + \underbrace{\begin{bmatrix} 1 & 0 \\ 0 & 1 \end{bmatrix}}_{B} \begin{bmatrix} a_x(t) \\ a_y(t) \end{bmatrix} + \underbrace{\begin{bmatrix} \alpha_0 + \alpha_1|\dot{\psi}(t)| \\ \alpha_2\dot{\psi}(t) \end{bmatrix}}_{K} \left( V_x^{stim}(t) - \widehat{V_x}(t) \right)$$

wherein $\alpha_0$, $\alpha_1$, $\alpha_2$ are filter fixed parameters and $t$ indicates time. Filter parameter $\alpha_0$ can be possibly equal to zero.

When the vehicle is moving straight, both the yaw rate and the yaw acceleration are close to zero. Under these conditions, as explained above, in order to compensate the lateral velocity $\hat{V}_y(t)$, parameter F must increase. In this manner, the negative component $- F \cdot \hat{V}_y(t)$ in the lateral acceleration $\dot{\hat{V}}_y(t)$ determined by the filter increases, too. On the contrary, parameter F must be decreasing when the yaw rate, the yaw acceleration or both are high, i.e. when the vehicle is running on a curve. Only under these conditions, F is zero or tends to zero, thus the filter is or tends to be a standard non-linear filter of the type described above. In other words, the negative component - $F \cdot \hat{V}_y(t)$ in the lateral acceleration $\hat{\dot{V}}_y(t)$ determined by the filter is zero or tends to be zero.

Figure 8 shows a possible curve describing parameter F as a function of the yaw rate and of the yaw acceleration. As can be seen, parameter F is maximum ($F_{max}$) when both the yaw rate and the yaw acceleration are 0, and tends to zero ($F_{min}$) when the yaw rate and/or the yaw acceleration increase. It is preferable that the transition from the maximum value $F_{max}$ and the minimum value $F_{min}$ is as smooth as possible, because this results in a smooth transition between turning conditions (F=$F_{min}$) and straight move conditions (F=$F_{max}$) in the filter.

For example, the parameter F can be described by a bivariate Gaussian distribution:

$$F\left(\dot{\psi}(t), \ddot{\psi}(t)\right) = F_{min} + \frac{F_{max}}{2\pi\sigma_1\sigma_2} e^{-\frac{1}{2}\left(\frac{\dot{\psi}^2}{\sigma_1^2}+\frac{\ddot{\psi}^2}{\sigma_2^2}\right)}$$

wherein $\sigma_1$ and $\sigma_2$, represents covariance of the yaw rate range and the yaw acceleration range, respectively.

Solving the non-linear system allows to determine the accelerations $\begin{bmatrix} \dot{\hat{V}}_x(t) \\ \dot{\hat{V}}_y(t) \end{bmatrix}$ from which the speeds $\begin{bmatrix} \hat{V}_x(t) \\ \hat{V}_y(t) \end{bmatrix}$ can be obtained through integration (module 25). Finally the side slip angle can be determined with the following formula (module 26):

$$\beta^{stim} = atan\left(\frac{\hat{V}_y}{\hat{V}_x}\right)$$

It is to be noted that, even though parameter F has been described as depending from both the yaw rate and the yaw acceleration, it can alternatively depend from the yaw rate or the yaw acceleration or the lateral acceleration, or combinations thereof, provided that the selected quantity/quantities allows/allow to determine if the vehicle is moving straight or on a curve, in such a manner that if the vehicle moves straight, parameter F reaches its maximum value $F_{max}$, and if the vehicle is moving on a curve, parameter F decreases until reaching its minimum value $F_{min}$. Consequently, if it is determined that the vehicle is moving straight, the negative component - $F \cdot \hat{V}_y(t)$ added to the lateral acceleration $\hat{\dot{V}}_y(t)$ in the filter reaches its maximum value.

The above described method can be implemented for example by a computer program directly downloadable in a working storage of a processing system for executing the steps of the method itself.

Such computer program can be for example loaded in a control unit of a vehicle.

Further, it is observed that the method according to the invention, besides being implemented by software, can be implemented by hardware devices or by a combination of hardware and software.

Finally, it is to be noted that, in the present description and in the appended claims, elements named "module" may be implemented using hardware devices (e.g. control units), software or a combination of hardware and software.

The skilled person, in order to satisfy specific contingent needs, may change the embodiments described so far, making several additions, modifications or replacements of elements with other functionally equivalent, without however departing from the scope of the appended claims.

**Claims**

1. Method for estimating the side slip angle ($\beta^{stim}$) of a four-wheeled vehicle, comprising:

- detecting signals representing the vehicle longitudinal acceleration (Ax), lateral acceleration (Ay), vertical acceleration (Az), yaw rate ($\dot{\psi}$), roll rate ($\dot{\theta}$), wheels speeds ($V_{FL}$, $V_{FR}$, $V_{RL}$, $V_{RR}$);
- pre-treating (1) said signals in order to correct measurement errors and/or noises, so to obtain corrected measurements of at least the longitudinal acceleration ($a_x$), the lateral acceleration ($a_y$), the yaw rate ($\dot{\psi}$) and the wheels speeds ($v_{FL}$, $v_{FR}$, $v_{RL}$, $v_{RR}$) ;

- determining (2) an estimated vehicle longitudinal speed $\left(V_x^{stim}\right)$ on the basis of at least one of the corrected measurements of the wheel speeds ($v_{FL}$, $v_{FR}$, $v_{RL}$, $v_{RR}$);
- determining a yaw acceleration ($\ddot{\psi}$) from the signal representing the yaw rate ($\dot{\psi}$); - solving (25) a time-depending parametrical non-linear filter, such as a Kalman filter or a Luenberger filter, describing the vehicle longitudinal and lateral speeds $\left(\widehat{V_x},\ \widehat{V_y}\right)$ and longitudinal and lateral accelerations $\left(\dot{\widehat{V_x}}, \dot{\widehat{V_y}}\right)$ as a function of the corrected measurements of the longitudinal acceleration ($a_x$), of the lateral acceleration ($a_y$), of the yaw rate ($\dot{\psi}$) and the estimated vehicle longitudinal speed $\left(V_x^{stim}\right)$ and of a filter parameter (F) depending from at least one of the vehicle yaw acceleration ($\ddot{\psi}$), yaw rate ($\dot{\psi}$) and lateral acceleration (ay) which adds a negative component to the lateral acceleration $\left(\dot{\widehat{V_y}}\right)$ determined by the filter itself, said filter parameter (F) being selected such that said negative component reaches a maximum value when it is determined that the vehicle is moving straight on the basis of said at least one of the vehicle yaw acceleration ($\ddot{\psi}$), yaw rate ($\dot{\psi}$) and lateral acceleration (ay);
- determining the vehicle estimated side slip angle ($\beta^{stim}$) from said longitudinal and lateral vehicle speeds $\left(\widehat{V_x},\ \widehat{V_y}\right)$ determined by solving the non-linear filter.

2. Method according to claim 1, wherein the non-linear filter has the following formula:

$$\begin{bmatrix}\dot{\widehat{V}}_x(t)\\\dot{\widehat{V}}_y(t)\end{bmatrix}=\underbrace{\begin{bmatrix}0 & \dot{\psi}(t)\\-\dot{\psi}(t) & -F\end{bmatrix}}_{A}\begin{bmatrix}\widehat{V_x}(t)\\\widehat{V_y}(t)\end{bmatrix}+\underbrace{\begin{bmatrix}1 & 0\\0 & 1\end{bmatrix}}_{B}\begin{bmatrix}a_x(t)\\a_y(t)\end{bmatrix}+\underbrace{\begin{bmatrix}\alpha_0+\alpha_1|\dot{\psi}(t)|\\\alpha_2\dot{\psi}(t)\end{bmatrix}}_{K}\left(V_x^{stim}(t)-\widehat{V_x}(t)\right)$$

wherein $\alpha_0$, $\alpha_1$, $\alpha_2$ are filter fixed parameters and $t$ indicates time.

3. Method according to claim 1 or 2, wherein the filter parameter (F) depends from the vehicle yaw acceleration ($\ddot{\psi}$) and yaw rate ($\dot{\psi}$) and is selected so to reach a maximum value ($F_{max}$) when both the yaw rate ($\dot{\psi}$) and the yaw acceleration ($\ddot{\psi}$) are zero, and to be zero or near zero as a minimum value ($F_{min}$) when the yaw rate ($\dot{\psi}$) and/or the yaw acceleration ($\ddot{\psi}$) reach or tend to reach maximum thresholds in absolute value, the filter parameter (F) decreasing continuously from its maximum value to its minimum value.

4. Method according to claim 3, wherein the filter parameter (F) is described by a bivariate Gaussian distribution:

$$F\left(\dot{\psi}(t),\ddot{\psi}(t)\right)=F_{min}+\frac{F_{max}}{2\pi\sigma_1\sigma_2}e^{-\frac{1}{2}\left(\frac{\dot{\psi}^2}{\sigma_1^2}+\frac{\ddot{\psi}^2}{\sigma_2^2}\right)}$$

wherein $\sigma_1$ and $\sigma_2$ represents covariance of the yaw rate range and of the yaw acceleration range, respectively.

5. Method according to any claim 1-4, wherein pre-treating (1) comprises filtering (4') the signals representing the vehicle longitudinal acceleration (Ax), lateral acceleration (Ay), vertical acceleration (Az), yaw rate ($\dot{\psi}$) and roll rate ($\dot{\theta}$).

6. Method according to any claim 1-5, wherein pre-treating (1) comprises: correcting (5) the signals representing the vehicle longitudinal acceleration (Ax), lateral acceleration (Ay) and vertical acceleration (Az) by compensating static roll and/or pitch mounting and/or static yaw.

7. Method according to any claim 1-6, wherein pre-treating (1) comprises correcting (6) the signals representing the longitudinal acceleration (Ax), the lateral acceleration (Ay) and the vertical acceleration (Az) on the basis of the distance of the longitudinal acceleration (Ax) lateral acceleration (Ay) and vertical acceleration (Az) sensor/sensors from the vehicle center of gravity and on the basis of the vehicle yaw rate ($\dot{\psi}$) and roll rate ($\dot{\theta}$).

8. Method according to any claim 1-7, wherein pre-treating (1) comprises determining (7) an estimated vehicle roll ($\theta^{stim}$) on the basis of the lateral acceleration (Ay) and of the roll rate ($\dot{\theta}$).

9. Method according to claim 8, wherein determining the estimated vehicle roll ($\theta^{stim}$) comprises estimating (7') an estimated static roll, estimating (7") an estimated dynamic roll and summing the estimated static roll and the estimated dynamic roll, thereby obtaining the estimated vehicle roll ($\theta^{stim}$), wherein:

    ◦ determining the estimated static roll (7') comprises:

        ▪ determining (8) a static roll corresponding to a static condition starting from the lateral acceleration (Ay) on the basis of a pre-determined relation between lateral acceleration (Ay) and static roll due to suspensions configuration and stiffness;
        ▪ filtering (9) the so-determined static roll in a high-pass filter;
        ▪ subtracting the filtered static roll from the static roll determined form said pre-determined relation;

    ◦ determining the estimated dynamic roll (7") comprises:

        ▪ filtering (10) the roll rate ($\dot{\theta}$) in a high-pass filter;
        ▪ integrating (11) the filtered roll rate.

10. Method according to any claim 1-9, wherein pre-treating (1) comprises: correcting (12) the lateral acceleration (Ay) by compensating the effect of gravity (g) on the lateral acceleration (Ay) due to the vehicle roll ($\theta$) on the basis of the estimated vehicle roll $\theta^{stim}$.

11. Method according to any claim 1-10, wherein pre-treating (1) comprises determining offsets of the signals representing the yaw rate ($\dot{\psi}$) and/or the roll rate ($\dot{\theta}$), comprising:

    - collecting (14) samples of the signal representing the yaw rate ($\dot{\psi}$) and/or the roll rate ($\dot{\theta}$) for a preselected time while maintaining the vehicle stopped;
    - Calculating (15) an exponentially weighted moving average of the samples collected, representing the yaw rate ($\dot{\psi}$) and/or the roll rate ($\dot{\theta}$) offset.

12. Method according to any claim 1-11, wherein pre-treating (1) comprises: determining offsets of the signals representing the longitudinal acceleration (Ax), comprising:

    - collecting samples of the difference between the signal representing the longitudinal acceleration (Ax) and a reference longitudinal acceleration obtained as a derivative (16) of a vehicle speed calculated on the basis of the signals representing the wheels speed for a preselected time while the vehicle is moving;
    - excluding the collected samples if:

        ◦ the vehicle speed exceeds a predetermined vehicle speed value (17); and/or
        ◦ the longitudinal acceleration (Ax) exceeds a predetermined vehicle longitudinal acceleration value (18); and/or
        ◦ the yaw rate ($\dot{\psi}$) exceeds a predetermined vehicle yaw rate value (19);

    - calculating (20) an exponentially weighted moving average of the non-excluded samples collected, representing the longitudinal acceleration offset.

13. Method according to any claim 1-12, wherein pre-treating (1) comprises: determining offsets of the signal representing the lateral acceleration (Ay), comprising:

    - collecting samples of the difference between the signal representing the lateral acceleration (Ay) and a reference lateral acceleration obtained as a multiplication (21) of a vehicle speed calculated on the basis of the signals representing the wheels speed and the yaw rate ($\dot{\psi}$) for a preselected time while the vehicle is moving;
    - excluding collected samples if:

        ◦ the vehicle speed exceeds a predetermined vehicle speed value (22); and/or
        ◦ the yaw rate ($\dot{\psi}$) exceeds a predetermined vehicle yaw rate value (23);

    - calculating (24) an exponentially weighted moving average of the non-excluded samples collected, representing the lateral acceleration offset.

**14.** Method according to any claim 1-13, wherein pre-treating comprises: filtering (4") the signals representing wheels speeds ($V_{FL}$, $V_{FR}$, $V_{RL}$, $V_{RR}$), the corrected measurements of the wheel speeds ($v_{FL}$, $v_{FR}$, $v_{RL}$, $v_{RR}$) corresponding to the filtered signals of the wheel speeds.

**15.** Method according to any claim 1-14, wherein determining (2) the estimated vehicle longitudinal speed $(V_x^{stim})$ comprises:

  ◦ detecting a signal representing the steering angle ($\delta$);

  ◦ determining the estimated vehicle longitudinal speed $(V_x^{stim})$ on the basis of the corrected measurements of the wheel speeds, the steering angle ($\delta$) and the yaw rate ($\dot{\psi}$).

**16.** Method according to claim 15, wherein determining (2) the estimated vehicle longitudinal speed $(V_x^{stim})$ comprises:

  - calculating a first estimated vehicle speed $(V_{FL}^{st})$ as a projection of the detected front left wheel speed ($V_{FL}$) on the vehicle longitudinal axis (X) on the basis of the steering angle ($\delta$);

  - calculating a second estimated vehicle speed $(V_{FR}^{st})$ as a projection of the detected front right wheel speed ($V_{FR}$) on the vehicle longitudinal axis (X) on the basis of the steering angle ($\delta$);

  - calculating a third estimated vehicle speed $(V_{FL}^{comp})$ starting from the first estimated vehicle speed $(V_{FL}^{st})$ by subtracting the speed component due to the yaw rate ($\dot{\psi}$);

  - calculating a fourth estimated vehicle speed $(V_{FR}^{comp})$ starting from the second estimated vehicle speed $(V_{FR}^{st})$ by subtracting the speed component due to the yaw rate ($\dot{\psi}$);

  - calculating a fifth estimated vehicle speed $(V_{RL}^{comp})$ starting from the detected rear left wheel speed ($V_{RL}$) by subtracting the speed component due to the yaw rate ($\dot{\psi}$);

  - calculating a sixth estimated vehicle speed $(V_{RR}^{comp})$ starting from the detected rear right wheel speed ($V_{RR}$) by subtracting the speed component due to the yaw rate;

  - calculating the estimated vehicle speed $(V_x^{stim})$ as:

   ◦ the minimum speed among the third, fourth, fifth, and sixth estimated vehicle speeds if the vehicle is longitudinally accelerating;
   ◦ the maximum speed among the third, fourth, fifth, sixth estimated vehicle speeds if the vehicle is longitudinally decelerating;
   ◦ the mean value of the third, fourth, fifth, sixth estimated vehicle speeds if the vehicle is moving at a longitudinal constant speed or having a longitudinal acceleration comprised between an upper positive and a lower negative acceleration threshold.

**17.** Computer program loadable in a control unit of a vehicle to carry out the method according to anyone of claims 1-16.

**18.** Control unit for a vehicle, in which a computer program to carry out the method according to anyone of claims 1-16 is loaded.

**19.** Vehicle comprising a control unit in which a computer program to carry out the method according to anyone of claims 1-16 is loaded.

**Patentansprüche**

**1.** Verfahren zum Schätzen des Schwimmwinkels ($\beta^{stim}$) eines vierrädrigen Fahrzeugs, umfassend:

  - Erfassen von Signalen, die die Längsbeschleunigung (Ax), die Querbeschleunigung (Ay), die vertikale Be-

schleunigung (Az), die Gierrate ($\dot{\psi}$), die Rollrate ($\dot{\theta}$), die Raddrehzahlen ($V_{FL}$, $V_{FR}$, $V_{RL}$, $V_{RR}$) des Fahrzeugs repräsentieren;

- Vorbehandeln (1) der Signale, um Messfehler und/oder Rauscheffekte zu korrigieren, um so korrigierte Messungen mindestens der Längsbeschleunigung ($a_x$), der Querbeschleunigung ($a_y$), der Gierrate ($\dot{\psi}$) und der Raddrehzahlen ($v_{FL}$, $v_{FR}$, $v_{RL}$, $v_{RR}$) zu erhalten;

- Bestimmen (2) einer geschätzten Längsgeschwindigkeit ($V_x^{stim}$) des Fahrzeugs auf Basis von mindestens einer der korrigierten Messungen der Raddrehzahlen ($v_{FL}$, $v_{FR}$, $v_{RL}$, $v_{RR}$) ;

- Bestimmen einer Gierbeschleunigung ($\ddot{\psi}$) aus dem Signal, das die Gierrate ($\dot{\psi}$) repräsentiert;

- Lösen (25) eines zeitabhängigen parametrischen nichtlinearen Filters, wie z. B. eines Kalman-Filters oder eines Luenberger-Filters, wobei die Längs- und Quergeschwindigkeiten ($\widehat{V_x}$, $\widehat{V_y}$) und die Längs- und Querbeschleunigungen ($\dot{\widehat{V}}_x$, $\dot{\widehat{V}}_y$) des Fahrzeugs als Funktion der korrigierten Messungen der Längsbeschleunigung ($a_x$), der Querbeschleunigung ($a_y$), der Gierrate ($\dot{\psi}$) und der geschätzten Fahrzeug Längsgeschwindigkeit ($V_x^{stim}$) und eines Filterparameters (F) beschrieben werden, der von mindestens einer von der Gierbeschleunigung ($\ddot{\psi}$), der Gierrate ($\dot{\psi}$) und der Querbeschleunigung ($a_y$) des Fahrzeugs abhängt, was eine negative Komponente zu der Querbeschleunigung ($\dot{\widehat{V}}_y$) hinzufügt, wie von dem Filter selbst bestimmt, wobei der Filterparameter (F) derart ausgewählt wird, dass die negative Komponente einen Maximalwert erreicht, wenn auf Basis der mindestens einen von der Gierbeschleunigung ($\ddot{\psi}$), der Gierrate ($\dot{\psi}$) und der Querbeschleunigung ($a_y$) des Fahrzeugs bestimmt wird, dass das Fahrzeug sich geradeaus bewegt;

- Bestimmen des geschätzten Schwimmwinkels ($\beta^{stim}$) des Fahrzeugs aus den Längs- und Quergeschwindigkeiten ($\widehat{V_x}$, $\widehat{V_y}$) des Fahrzeugs, wie durch Lösen des nichtlinearen Filters bestimmt.

2. Verfahren nach Anspruch 1, wobei der nichtlineare Filter die folgende Formel aufweist:

$$\begin{bmatrix} \dot{\widehat{V}}_x(t) \\ \dot{\widehat{V}}_y(t) \end{bmatrix} = \underbrace{\begin{bmatrix} 0 & \dot{\psi}(t) \\ -\dot{\psi}(t) & -F \end{bmatrix}}_{A} \begin{bmatrix} \widehat{V}_x(t) \\ \widehat{V}_y(t) \end{bmatrix} + \underbrace{\begin{bmatrix} 1 & 0 \\ 0 & 1 \end{bmatrix}}_{B} \begin{bmatrix} a_x(t) \\ a_y(t) \end{bmatrix} + \underbrace{\begin{bmatrix} \alpha_0 + \alpha_1 |\dot{\psi}(t)| \\ \alpha_2 \dot{\psi}(t) \end{bmatrix}}_{K} \left( V_x^{stim}(t) - \widehat{V_x}(t) \right)$$

wobei $\alpha_0$, $\alpha_1$, $\alpha_2$ filterfeste Parameter sind, und $t$ die Zeit angibt.

3. Verfahren nach Anspruch 1 oder 2, wobei der Filterparameter (F) von der Gierbeschleunigung ($\ddot{\psi}$) und der Gierrate ($\dot{\psi}$) des Fahrzeugs abhängt und so ausgewählt wird, dass er einen Maximalwert ($F_{max}$) erreicht, wenn sowohl die Gierrate ($\dot{\psi}$) als auch die Gierbeschleunigung ($\ddot{\psi}$) null sind, und null oder nahe null als Minimalwert ($F_{min}$) ist, wenn die Gierrate ($\dot{\psi}$) und/oder die Gierbeschleunigung ($\ddot{\psi}$) maximale Schwellen des Absolutwerts erreichen oder zu diesen tendieren.

4. Verfahren nach Anspruch 3, wobei der Filterparameter (F) durch eine bivariate Gauß-Verteilung beschrieben wird:

$$F\left(\dot{\psi}(t), \ddot{\psi}(t)\right) = F_{min} + \frac{F_{max}}{2\pi\sigma_1\sigma_2} e^{-\frac{1}{2}\left(\frac{\dot{\psi}^2}{\sigma_1^2} + \frac{\ddot{\psi}^2}{\sigma_2^2}\right)}$$

wobei $\sigma_1$ und $\sigma_2$ die Kovarianz des Gierratenbereichs bzw. des Gierbeschleunigungsbereichs repräsentiert.

5. Verfahren nach einem der Ansprüche 1 bis 4, wobei das Vorbehandeln (1) das Filtern (4') der Signale umfasst, die die Fahrzeug Längsbeschleunigung (Ax), die Querbeschleunigung (Ay), die vertikale Beschleunigung (Az), die Gierrate ($\dot{\psi}$) und die Rollrate ($\dot{\theta}$) repräsentieren.

6. Verfahren nach einem der Ansprüche 1 bis 5, wobei das Vorbehandeln (1) Folgendes umfasst: Korrigieren (5) der Signale, die die Fahrzeug Längsbeschleunigung (Ax), die Querbeschleunigung (Ay) und die vertikale Beschleunigung (Az) repräsentieren, durch Kompensieren des statischen Rollens und/oder der Pitch-Bestückung und/oder des statisches Gierens.

7. Verfahren nach einem der Ansprüche 1 bis 6, wobei das Vorbehandeln (1) Folgendes umfasst: Korrigieren (6) der Signale, die die Längsbeschleunigung (Ax), die Querbeschleunigung (Ay) und die vertikale Beschleunigung (Az) repräsentieren, auf Basis des Abstands des Sensors/der Sensoren der Längsbeschleunigung (Ax), der Querbeschleunigung (Ay) und der vertikalen Beschleunigung (Az) vom Schwerpunkt des Fahrzeugs und auf Basis der Gierrate ($\dot{\psi}$) und der Rollrate ($\dot{\theta}$) des Fahrzeugs.

8. Verfahren nach einem der Ansprüche 1 bis 7, wobei das Vorbehandeln (1) das Bestimmen (7) eines geschätzten Rollens ($\theta^{stim}$) des Fahrzeugs auf Basis der Querbeschleunigung (Ay) und der Rollrate ($\dot{\theta}$) umfasst.

9. Verfahren nach Anspruch 8, wobei das Bestimmen des geschätzten Rollens ($\theta^{stim}$) des Fahrzeugs das Schätzen (7') eines geschätzten statischen Rollens, das Schätzen (7") eines geschätzten dynamischen Rollens und das Aufsummieren des geschätzten statischen Rollens und des geschätzten dynamischen Rollens umfasst, wodurch das geschätzte Rollen ($\theta^{stim}$) des Fahrzeugs erhalten wird, wobei:

   ◦ das Bestimmen des geschätzten statischen Rollens (7') Folgendes umfasst:

      • Bestimmen (8) eines statischen Rollens entsprechend einem statischen Zustand beginnend von der Querbeschleunigung (Ay) auf Basis einer vorher festgelegten Beziehung zwischen der Querbeschleunigung (Ay) und dem statischen Rollen auf Grund der Konfiguration und der Steifigkeit der Aufhängung;
      • Filtern (9) des so bestimmten statischen Rollens in einem Hochpass-Filter;
      • Subtrahieren des gefilterten statischen Rollens von dem statischen Rollen, das aus der vorher festgelegten Beziehung bestimmt wurde;

   ◦ das Bestimmen des geschätzten dynamischen Rollens (7") umfasst:

      • Filtern (10) der Rollrate ($\dot{\theta}$) in einem Hochpass-Filter;
      • Integrieren (11) der gefilterten Rollrate.

10. Verfahren nach einem der Ansprüche 1 bis 9, wobei das Vorbehandeln (1) Folgendes umfasst: Korrigieren (12) der Querbeschleunigung (Ay) durch Kompensieren der Wirkung der Schwerkraft (g) auf die Querbeschleunigung (Ay) auf Grund des Rollens ($\theta$) des Fahrzeugs auf Basis des geschätzten Rollens $\theta^{stim}$ des Fahrzeugs.

11. Verfahren nach einem der Ansprüche 1 bis 10, wobei das Vorbehandeln (1) Folgendes umfasst

   - Bestimmen von Offsets der Signale, die die Gierrate ($\dot{\psi}$) und/oder die Rollrate ($\dot{\theta}$) repräsentieren, umfassend:
   - Sammeln (14) von Proben des Signals, das die Gierrate ($\dot{\psi}$) und/oder die Rollrate ($\dot{\theta}$) über eine vorab ausgewählte Zeit repräsentiert, während das Fahrzeug im Stillstand gehalten wird;
   - Berechnen (15) eines exponentiell gewichteten gleitenden Durchschnitts der gesammelten Proben, die den Gierraten-($\dot{\psi}$) und/oder den Rollraten-($\dot{\theta}$) Offset repräsentieren.

12. Verfahren nach einem der Ansprüche 1 bis 11, wobei das Vorbehandeln (1) Folgendes umfasst:

   - Bestimmen von Offsets des Signals, das die Längsbeschleunigung (Ax) repräsentiert, umfassend:
   - Sammeln von Proben der Differenz zwischen dem Signal, das die Längsbeschleunigung (Ax) repräsentiert, und einer Bezugs-Längsbeschleunigung, die als Ableitung (16) einer Fahrzeuggeschwindigkeit erhalten wird, die auf Basis des Signals berechnet wird, das die Raddrehzahl über eine vorab ausgewählte Zeit repräsentiert, während das Fahrzeug in Bewegung ist;
   - Ausschließen der gesammelten Proben, falls:

      ◦ die Fahrzeuggeschwindigkeit einen vorab festgelegten Geschwindigkeitswert (17) des Fahrzeugs überschreitet; und/oder
      ◦ die Längsbeschleunigung (Ax) einen vorab festgelegten Längsbeschleunigungswert (18) des Fahrzeugs überschreitet; und/oder
      ◦ die Gierrate ($\dot{\psi}$) einen vorab festgelegten Gierratenwert (19) des Fahrzeugs überschreitet;

- Berechnen (20) eines exponentiell gewichteten gleitenden Durchschnitts der nicht ausgeschlossenen gesammelten Proben, die den Längsbeschleunigungs-Offset repräsentieren.

**13.** Verfahren nach einem der Ansprüche 1 bis 12, wobei das Vorbehandeln (1) Folgendes umfasst:

- Bestimmen von Offsets des Signals, das die Querbeschleunigung (Ay) repräsentiert, umfassend:
- Sammeln von Proben der Differenz zwischen dem Signal, das die Querbeschleunigung (Ay) repräsentiert, und einer Bezugs-Querbeschleunigung, die als Multiplikation (21) einer Fahrzeuggeschwindigkeit, die auf Basis des Signals berechnet wird, das die Raddrehzahl repräsentiert, und der Gierrate ($\dot{\psi}$) über eine vorab ausgewählte Zeit erhalten wird, während das Fahrzeug in Bewegung ist;
- Ausschließen der gesammelten Proben, falls:

  ◦ die Fahrzeuggeschwindigkeit einen vorab festgelegten Geschwindigkeitswert (22) des Fahrzeugs überschreitet; und/oder ($\dot{\psi}$)
  ◦ die Gierrate ($\dot{\psi}$) einen vorab festgelegten Gierratenwert (23) des Fahrzeugs überschreitet;

- Berechnen (24) eines exponentiell gewichteten gleitenden Durchschnitts der nicht ausgeschlossenen gesammelten Proben, die den Querbeschleunigungs-Offset repräsentieren.

**14.** Verfahren nach einem der Ansprüche 1 bis 13, wobei das Vorbehandeln Folgendes umfasst: Filtern (4") der Signale, die die Raddrehzahlen ($V_{FL}$, $V_{FR}$, $V_{RL}$, $V_{RR}$) repräsentieren, wobei die korrigierten Messungen der Raddrehzahlen ($v_{FL}$, $v_{FR}$, $v_{RL}$, $v_{RR}$) den gefilterten Signalen der Raddrehzahlen entsprechen.

**15.** Verfahren nach einem der Ansprüche 1 bis 14, wobei das Bestimmen (2) der geschätzten Längsgeschwindigkeit ($V_x^{stim}$) des Fahrzeugs Folgendes umfasst:

  ◦ Erfassen eines Signals, das den Lenkwinkel ($\delta$) repräsentiert;
  ◦ Bestimmen der geschätzten Längsgeschwindigkeit ($V_x^{stim}$) des Fahrzeugs auf Basis der korrigierten Messungen der Raddrehzahlen, dem Lenkwinkel ($\delta$) und der Gierrate ($\dot{\psi}$).

**16.** Verfahren nach Anspruch 15, wobei das Bestimmen (2) der geschätzten Längsgeschwindigkeit ($V_x^{stim}$) des Fahrzeugs Folgendes umfasst:

- Berechnen einer ersten geschätzten Fahrzeuggeschwindigkeit ($V_{FL}^{st}$) als Projektion der erfassten Drehzahl des linken Vorderrads ($V_{FL}$) auf die Längsachse (X) des Fahrzeugs auf Basis des Lenkwinkels ($\delta$);
- Berechnen einer zweiten geschätzten Fahrzeuggeschwindigkeit ($V_{FR}^{st}$) als Projektion der erfassten Drehzahl des rechten Vorderrads ($V_{FR}$) auf die Längsachse (X) des Fahrzeugs auf Basis des Lenkwinkels ($\delta$);
- Berechnen einer dritten geschätzten Fahrzeuggeschwindigkeit ($V_{FL}^{comp}$), beginnend mit der ersten geschätzten Fahrzeuggeschwindigkeit ($V_{FL}^{st}$), durch Subtrahieren der Geschwindigkeitskomponente auf Grund der Gierrate ($\dot{\psi}$) ;
- Berechnen einer vierten geschätzten Fahrzeuggeschwindigkeit ($V_{FR}^{comp}$), beginnend mit der zweiten geschätzten Fahrzeuggeschwindigkeit ($V_{FR}^{st}$), durch Subtrahieren der Geschwindigkeitskomponente auf Grund der Gierrate ($\dot{\psi}$);
- Berechnen einer fünften geschätzten Fahrzeuggeschwindigkeit ($V_{RL}^{comp}$), beginnend mit der erfassten Drehzahl des linken Hinterrads ($V_{RL}$), durch Subtrahieren der Geschwindigkeitskomponente auf Grund der Gierrate ($\dot{\psi}$) ;
- Berechnen einer sechsten geschätzten Fahrzeuggeschwindigkeit ($V_{RR}^{comp}$), beginnend mit der erfassten Drehzahl des rechten Hinterrads ($V_{RR}$), durch Subtrahieren der Geschwindigkeitskomponente auf Grund der Gierrate;
- Berechnen der geschätzten Fahrzeuggeschwindigkeit ($V_x^{stim}$) als:

  ◦ die minimale Geschwindigkeit unter der dritten, vierten, fünften und sechsten geschätzten Fahrzeuggeschwindigkeit, falls das Fahrzeug längs beschleunigt;
  ◦ die maximale Geschwindigkeit unter der dritten, vierten, fünften, sechsten geschätzten Fahrzeuggeschwindigkeit, falls das Fahrzeug längs verzögert;
  ◦ der Mittelwert der dritten, vierten, fünften, sechsten geschätzten Fahrzeuggeschwindigkeit, falls das Fahrzeug sich mit einer konstanten Längsgeschwindigkeit bewegt oder eine Längsbeschleunigung zwischen einer oberen positiven und einer unteren negativen Schwelle für die Beschleunigung aufweist.

**17.** Computerprogramm, das in eine Steuereinheit für ein Fahrzeug geladen werden kann, um das Verfahren nach einem der Ansprüche 1 bis 16 auszuführen.

**18.** Steuereinheit für ein Fahrzeug, in die ein Computerprogramm zum Ausführen des Verfahrens nach einem der Ansprüche 1 bis 16 geladen ist.

**19.** Fahrzeug, umfassend eine Steuereinheit, in die ein Computerprogramm zum Ausführen des Verfahrens nach einem der Ansprüche 1 bis 16 geladen ist.

**Revendications**

**1.** Procédé d'estimation de l'angle de dérapage ($\beta^{stim}$) d'un véhicule à quatre roues, comprenant :

- la détection de signaux représentant l'accélération longitudinale (Ax), l'accélération latérale (Ay), l'accélération verticale (Az), la vitesse de lacet ($\dot{\psi}$), la vitesse de roulis($\dot{\theta}$), les vitesses des roues ($V_{FL}$, $V_{FR}$, $V_{RL}$, $V_{RR}$) du véhicule ;
- le pré-traitement (1) desdits signaux afin de corriger des erreurs de mesure et/ou des bruits afin d'obtenir des mesures corrigées au moins de l'accélération longitudinale ($a_x$), de l'accélération latérale ($a_y$), de la vitesse de lacet ($\dot{\psi}$) et des vitesses des roues ($V_{FL}$, $V_{FR}$, $V_{RL}$, $V_{RR}$) ;
- la détermination (2) d'une vitesse longitudinale estimée $\left(V_x^{stim}\right)$ du véhicule en fonction d'au moins une des mesures corrigées des vitesses des roues ($V_{FL}$, $V_{FR}$, $V_{RL}$, $V_{RR}$) ;
- la détermination d'une accélération de lacet ($\ddot{\psi}$) à partir du signal représentant la vitesse de lacet ($\dot{\psi}$);
- la résolution (25) d'un filtre non linéaire paramétrique dépendant du temps, tel qu'un filtre de Kalman ou un filtre de Luenberger, décrivant les vitesses longitudinale et latérale $\left(\widehat{V_x},\ \widehat{V_y}\right)$ ainsi que les accélérations longitudinale et latérale $\left(\dot{\widehat{V_x}},\dot{\widehat{V_y}}\right)$ du véhicule en fonction des mesures corrigées de l'accélération longitudinale ($a_x$), de l'accélération latérale ($a_y$), de la vitesse de lacet ($\dot{\psi}$) et de la vitesse longitudinale estimée $\left(V_x^{stim}\right)$ du véhicule et d'un paramètre de filtrage (F) dépendant d'au moins un élément parmi l'accélération de lacet ($\ddot{\psi}$), la vitesse de lacet ($\dot{\psi}$) et l'accélération latérale ($a_y$) du véhicule qui ajoute une composante négative à l'accélération latérale $\left(\dot{\widehat{V_y}}\right)$ déterminée par le filtre lui-même, ledit paramètre de filtrage (F) étant choisi de telle sorte que ladite composante négative atteigne une valeur maximale lorsqu'il est déterminé que le véhicule se déplace en ligne droite en se basant sur ledit au moins un élément parmi l'accélération de lacet ($\ddot{\psi}$), la vitesse de lacet ($\dot{\psi}$) et l'accélération latérale ($a_y$) du véhicule ;
- la détermination de l'angle de dérapage estimé ($\beta^{stim}$) du véhicule à partir desdites vitesses longitudinale et latérale $\left(\widehat{V_x},\ \widehat{V_y}\right)$ du véhicule déterminées par la résolution du filtre non linéaire.

**2.** Procédé selon la revendication 1, dans lequel le filtre non linéaire présente la formule suivante :

$$\begin{bmatrix}\dot{\widehat{V}}_x(t)\\\dot{\widehat{V}}_y(t)\end{bmatrix}=\underbrace{\begin{bmatrix}0 & \dot{\psi}(t)\\-\dot{\psi}(t) & -F\end{bmatrix}}_{A}\begin{bmatrix}\widehat{V}_x(t)\\\widehat{V}_y(t)\end{bmatrix}+\underbrace{\begin{bmatrix}1 & 0\\0 & 1\end{bmatrix}}_{B}\begin{bmatrix}a_x(t)\\a_y(t)\end{bmatrix}+\underbrace{\begin{bmatrix}\alpha_0+\alpha_1|\dot{\psi}(t)|\\\alpha_2\dot{\psi}(t)\end{bmatrix}}_{K}\left(V_x^{stim}(t)-\widehat{V_x}(t)\right)$$

dans laquelle $\alpha_0$, $\alpha_1$, $\alpha_2$ sont des paramètres de filtrage fixes et $t$ indique le temps.

**3.** Procédé selon la revendication 1 ou 2, dans lequel le paramètre de filtrage (F) dépend de l'accélération de lacet ($\ddot{\psi}$) et de la vitesse de lacet ($\dot{\psi}$) du véhicule et est choisi de manière à atteindre une valeur maximum ($F_{max}$) lorsque la vitesse de lacet ($\dot{\psi}$) et l'accélération de lacet ($\ddot{\psi}$) sont nulles, et pour être nul ou presque nul en tant que valeur minimum ($F_{min}$) lorsque la vitesse de lacet ($\dot{\psi}$) et/ou l'accélération de lacet ($\ddot{\psi}$) atteint/atteignent ou a/ont tendance

**17**

à atteindre des seuils maximum en valeur absolue, le paramètre de filtrage (F) diminuant de manière continue entre sa valeur maximum et sa valeur minimum.

4. Procédé selon la revendication 3, dans lequel le paramètre de filtrage (F) est décrit par une distribution gaussienne bivariée :

$$F\left(\dot{\psi}(t), \ddot{\psi}(t)\right) = F_{min} + \frac{F_{max}}{2\pi\sigma_1\sigma_2} e^{-\frac{1}{2}\left(\frac{\dot{\psi}^2}{\sigma_1^2} + \frac{\ddot{\psi}^2}{\sigma_2^2}\right)}$$

dans laquelle $\sigma_1$ et $\sigma_2$ représentent une covariance de la plage de vitesses de lacet et de la plage d'accélérations de lacet, respectivement.

5. Procédé selon l'une quelconque des revendications 1 à 4, dans lequel le pré-traitement (1) comprend le filtrage (4') des signaux représentant l'accélération longitudinale (Ax), l'accélération latérale (Ay), l'accélération verticale (Az), la vitesse de lacet ($\dot{\psi}$) et la vitesse de roulis ($\dot{\theta}$) du véhicule.

6. Procédé selon l'une quelconque des revendications 1 à 5, dans lequel le pré-traitement (1) comprend : la correction (5) des signaux représentant l'accélération longitudinale (Ax), l'accélération latérale (Ay) et l'accélération verticale (Az) du véhicule en compensant le roulis statique et/ou le montage de tangage et/ou le lacet statique.

7. Procédé selon l'une quelconque des revendications 1 à 6, dans lequel le pré-traitement (1) comprend la correction (6) des signaux représentant l'accélération longitudinale (Ax), l'accélération latérale (Ay) et l'accélération verticale (Az) en fonction de la distance du ou des capteur(s) d'accélération longitudinale (Ax), d'accélération latérale (Ay) et d'accélération verticale (Az) à partir du centre de gravité du véhicule et en fonction de la vitesse de lacet ($\dot{\psi}$) et de la vitesse de roulis ($\dot{\theta}$) du véhicule.

8. Procédé selon l'une quelconque des revendications 1 à 7, dans lequel le pré-traitement (1) comprend la détermination (7) d'un roulis estimé du véhicule ($\theta^{stim}$) en fonction de l'accélération latérale (Ay) et de la vitesse de roulis ($\dot{\theta}$).

9. Procédé selon la revendication 8, dans lequel la détermination du roulis estimé du véhicule ($\theta^{stim}$) comprend l'estimation (7') d'un roulis statique estimé, l'estimation (7") d'un roulis dynamique estimé et l'addition du roulis statique estimé et du roulis dynamique estimé, obtenant ainsi le roulis estimé du véhicule ($\theta^{stim}$), dans lequel :

    ◦ la détermination du roulis statique estimé (7') comprend :

        • la détermination (8) d'un roulis statique correspondant à une condition statique en partant de l'accélération latérale (Ay) en fonction d'une relation prédéterminée entre l'accélération latérale (Ay) et le roulis statique en raison de la configuration et de la rigidité des suspensions ;
        • le filtrage (9) du roulis statique ainsi déterminé dans un filtre passe-haut ;
        • la soustraction du roulis statique filtré du roulis statique déterminé à partir de ladite relation prédéterminée ;

    ◦ la détermination du roulis dynamique estimé (7") comprend :

        • le filtrage (10) de la vitesse de roulis ($\dot{\theta}$) dans un filtre passe-haut ;
        • l'intégration (11) de la vitesse de roulis filtrée.

10. Procédé selon l'une quelconque des revendications 1 à 9, dans lequel le pré-traitement (1) comprend : la correction (12) de l'accélération latérale (Ay) en compensant l'effet de la gravité (g) sur l'accélération latérale (Ay) en raison du roulis du véhicule ($\theta$) en fonction du roulis estimé du véhicule $\theta^{stim}$.

11. Procédé selon l'une quelconque des revendications 1 à 10, dans lequel le pré-traitement (1) comprend la détermination de décalages des signaux représentant la vitesse de lacet ($\dot{\psi}$) et/ou la vitesse de roulis ($\dot{\theta}$), comprenant :

    - la collecte (14) d'échantillons du signal représentant la vitesse de lacet ($\dot{\psi}$) et/ou la vitesse de roulis ($\dot{\theta}$) pendant une période prédéfinie tout en maintenant le véhicule à l'arrêt ;
    - le calcul (15) d'une moyenne mobile à pondération exponentielle des échantillons collectés, représentant le décalage de vitesse de lacet ($\dot{\psi}$) et/ou de vitesse de roulis ($\dot{\theta}$).

**12.** Procédé selon l'une quelconque des revendications 1 à 11, dans lequel le pré-traitement (1) comprend : la détermination de décalages des signaux représentant l'accélération longitudinale (Ax), comprenant :

- la collecte d'échantillons de la différence entre le signal représentant l'accélération longitudinale (Ax) et une accélération longitudinale de référence obtenue en tant que dérivée (16) d'une vitesse du véhicule calculée en fonction des signaux représentant la vitesse des roues pendant une période prédéfinie lorsque le véhicule se déplace ;
- l'exclusion des échantillons collectés si

◦ la vitesse du véhicule dépasse une valeur déterminée de la vitesse du véhicule (17) : et/ou
◦ l'accélération longitudinale (Ax) dépasse une valeur prédéterminée de l'accélération longitudinale du véhicule (18) ; et/ou
◦ la vitesse de lacet ($\dot{\psi}$) dépasse une valeur prédéterminée de la vitesse de lacet du véhicule (19) ;

- le calcul (20) d'une moyenne mobile à pondération exponentielle des échantillons non exclus collectés, représentant le décalage d'accélération longitudinale.

**13.** Procédé selon l'une quelconque des revendications 1 à 12, dans lequel le pré-traitement (1) comprend : la détermination de décalages du signal représentant l'accélération latérale (Ay), comprenant :

- la collecte d'échantillons de la différence entre le signal représentant l'accélération latérale (Ay) et une accélération latérale de référence obtenue en tant que multiplication (21) d'une vitesse du véhicule calculée en fonction des signaux représentant la vitesse des roues et la vitesse de lacet ($\dot{\psi}$) pendant une période prédéfinie lorsque le véhicule se déplace ;
- l'exclusion d'échantillons collectés si :

◦ la vitesse du véhicule dépasse une valeur prédéterminée de la vitesse du véhicule (22) ; et/ou
◦ la vitesse de lacet ($\dot{\psi}$) dépasse une valeur prédéterminée de la vitesse de lacet du véhicule (23) ;

- le calcul (24) d'une moyenne mobile à pondération exponentielle des échantillons non exclus collectés, représentant le décalage d'accélération latérale.

**14.** Procédé selon l'une quelconque des revendications 1 à 13, dans lequel le pré-traitement comprend : le filtrage (4") des signaux représentant des vitesses des roues ($V_{FL}$, $V_{FR}$, $V_{RL}$, $V_{RR}$), les mesures corrigées des vitesses des roues ($V_{FL}$, $V_{FR}$, $V_{RL}$, $V_{RR}$) correspondant aux signaux filtrés des vitesses des roues.

**15.** Procédé selon l'une quelconque des revendications 1 à 14, dans lequel la détermination (2) de la vitesse longitudinale estimée $\left(V_x^{stim}\right)$ du véhicule comprend :

◦ la détection d'un signal représentant l'angle de braquage ($\delta$) ;
◦ la détermination de la vitesse longitudinale estimée $\left(V_x^{stim}\right)$ du véhicule en fonction des mesures corrigées des vitesses des roues, de l'angle de braquage ($\delta$) et de la vitesse de lacet ($\dot{\psi}$).

**16.** Procédé selon la revendication 15, dans lequel la détermination (2) de la vitesse longitudinale estimée $\left(V_x^{stim}\right)$ du véhicule comprend :

- le calcul d'une première vitesse estimée $\left(V_{FL}^{st}\right)$ du véhicule comme projection de la vitesse détectée de la roue avant gauche ($V_{FL}$) sur l'axe longitudinal (X) du véhicule en fonction de l'angle de braquage ($\delta$) ;

- le calcul d'une deuxième vitesse estimée $\left(V_{FR}^{st}\right)$ du véhicule comme projection de la vitesse détectée de la roue avant droite ($V_{FR}$) sur l'axe longitudinal (X) du véhicule en fonction de l'angle de braquage ($\delta$) ;

- le calcul d'une troisième vitesse estimée $\left(V_{FL}^{comp}\right)$ du véhicule en partant de la première vitesse estimée $\left(V_{FL}^{st}\right)$ du véhicule en soustrayant la composante de vitesse due à la vitesse de lacet ($\dot{\psi}$) ;

- le calcul d'une quatrième vitesse estimée $\left(V_{FR}^{comp}\right)$ du véhicule en partant de la deuxième vitesse estimée $\left(V_{FR}^{st}\right)$ du véhicule en soustrayant la composante de vitesse due à la vitesse de lacet ($\dot{\psi}$) ;

- le calcul d'une cinquième vitesse estimée $\left(V_{RL}^{comp}\right)$ du véhicule en partant de la vitesse détectée de la roue arrière gauche ($V_{RL}$) en soustrayant la composante de vitesse due à la vitesse de lacet ($\dot{\psi}$) ;

- le calcul d'une sixième vitesse estimée $\left(V_{RR}^{comp}\right)$ du véhicule en partant de la vitesse détectée de la roue arrière droite ($V_{RR}$) en soustrayant la composante de vitesse due à la vitesse de lacet.

- le calcul de la vitesse estimée $\left(V_x^{stim}\right)$ du véhicule en tant que :

  ∘ la vitesse minimum parmi les troisième, quatrième, cinquième et sixième vitesses estimées du véhicule si le véhicule accélère longitudinalement ;
  ∘ la vitesse maximum parmi les troisième, quatrième, cinquième et sixième vitesses estimées du véhicule si le véhicule décélère longitudinalement ;
  ∘ la valeur moyenne des troisième, quatrième, cinquième et sixième vitesses estimées du véhicule si le véhicule se déplace à une vitesse longitudinale constante ou possède une accélération longitudinale comprise entre des seuils d'accélération positif supérieur et négatif inférieur.

**17.** Programme informatique chargeable dans une unité de commande d'un véhicule pour exécuter le procédé selon l'une quelconque des revendications 1 à 16.

**18.** Unité de commande destinée à un véhicule, dans laquelle un programme informatique destiné à exécuter le procédé selon l'une quelconque des revendications 1 à 16 est chargé.

**19.** Véhicule comprenant une unité de commande dans laquelle un programme informatique destiné à exécuter le procédé selon l'une quelconque des revendications 1 à 16 est chargé.

**FIG. 1a**

**FIG. 1b**

**FIG. 1c**

**FIG. 2**

Pre-filtering

Vehicle speed estimation

Correction of IMU mounting

Center of mass transp.

Roll estimation

Gravity compensation

Offset estimation

$\beta$ estimation

**FIG. 3**

**FIG. 4**

EP 3 209 529 B1

**FIG. 5**

**FIG. 6**

**FIG. 7**

**FIG. 8**

**REFERENCES CITED IN THE DESCRIPTION**

**Patent documents cited in the description**

- DE 102008013102 A1
- WO 2013087169 A1